Europäisches Patentamt

(18) European Patent Office

Office européen des brevets

(11) Publication number: **0 056 378**
**B1**

(12) **EUROPEAN PATENT SPECIFICATION**

(45) Date of publication of patent specification: **29.05.85**

(21) Application number: **81901792.2**

(22) Date of filing: **30.06.81**

(86) International application number:
**PCT/AU81/00080**

(87) International publication number:
**WO 82/00104 21.01.82 Gazette 82/03**

(51) Int. Cl.⁴: **B 01 F 17/22, B 01 F 17/34**

(54) **AQEOUS SUSPENSIONS OF ORGANIC PEROXIDES.**

(30) Priority: **30.06.80 AU 4291/80**

(43) Date of publication of application:
**28.07.82 Bulletin 82/30**

(45) Publication of the grant of the patent:
**29.05.85 Bulletin 85/22**

(84) Designated Contracting States:
**DE FR GB NL**

(56) References cited:
**AU-B- 495 345**
**AU-B- 501 457**
**US-A-3 288 772**
**US-A-3 825 509**

(73) Proprietor: **INTEROX CHEMICALS PTY. LIMITED**
**20-22 McPherson Street**
**Banksmeadow, N.S.W. 2019 (AU)**

(72) Inventor: **VAN LAAR, Hendrik Lucas**
**10 Bedford Crescent**
**Collaroy N.S.W. 2097 (AU)**

(74) Representative: **ffrench-Lynch, Cecil et al**
**Laporte Industries Ltd., Group Patent**
**Department, P.O. Box 2, Moorfield Road**
**Widnes, Cheshire WA8 OJU (GB)**

Courier Press, Leamington Spa, England.

# Description

## Technical Field of the Invention

The invention relates to aqueous suspensions of organic peroxides and to a process for their preparation.

This invention is directed to a novel process for the preparation of a stable, pumpable, aqueous suspension of an organic peroxide or mixed organic peroxides, and also to the novel suspension itself. This suspension is especially suitable for the initiation of polymerisation of vinyl chloride to form polyvinyl chloride that meets the volume resistivity specifications required of electrical cable sheathing materials. It is also suitable for the polymerisation/copolymerisation of ethylenically unsaturated monomers to form general purpose polymers.

Of all the possible homo- and co-polymerisation reactions of ethylenically unsaturated monomers, an important one, commercially, is the suspension polymerisation of vinyl chloride. The vinyl chloride monomer is dispersed in water in a reactor, and polymerisation initiation is effected through the medium of a thermally labile compound capable of generating free radicals — such as peroxydicarbonates and aromatic/aliphatic diacyl peroxides. Since these organic peroxides are solids at temperatures of about 20°C, feeding initiator into the reactor can present problems to polymer manufacturers.

The exacting specification of volume resistivity, for electrical grade polyvinyl chloride, has put a further burden on manufacturers. The specification as laid down in the National Standards is for "finished" polymer i.e. polyvinyl chlorine resin that has been compounded with plasticiser such as di-isoocyl phthalate, and stabilisers such as a basic lead stearate or stearic acid. In practice, the actual "buying" specifications of cable manufacturers, for polyvinyl chloride resin, are generally ten times higher than the minimum National Standards as regards volume resistivity, to allow for trace impurities in the compounding additives degrading the inherent resistivity of the resin. From our experience it is known that, prior to the present invention, the best way to produce this electrical grade resin by suspension polymerisation was to use technically pure organic peroxide, choosing either a liquid or a powder or flake. In those instances where the organic peroxide (usually a peroxydicarbonate, an aliphatic diacyl peroxide or an aromatic diacyl peroxide) was a powder or flake, it may additionally have been water damped for safety reasons.

One method of charging initiator into the reactor has been to open a port in the reactor after the vinyl chloride monomer is thoroughly dispersed in the water and to add, manually or mechanically, an appropriate quantity of pure or dispersed initiator. However, this practice is generally no longer feasible since many countries have acted, by legislation, to regulate the escape into the air of monomers detrimental to health, e.g. vinyl chloride. Reactor trains are often now fully closed and, therefore, initiator additions must be via some form of pump or syringe, thereby requiring the organic peroxide to be in a fluid, pumpable form at ambient temperatures, e.g. up to about 35°C. Pure short chain length alkyl peroxydicarbonates, or peresters can be liquid at ambient temperatures. However, the former are explosively unstable at such temperatures, whilst the latter give unacceptable performance in the polymerisation reactor.

Simple dissolution of the organic peroxide — in an organic solvent such as benzene, chloroform or acetone — is impractical since the decomposition rate of the organic peroxide is markedly increased. As well as rapid peroxide loss, the exotherm of decomposition may give rise to spontaneous ignition or explosion. We are thus left with dispersion/emulsification/suspension of the organic peroxide into water as representing the best mode of fluidising an initiator system, especially if the organic peroxide is solid at a temperature of about 20°C.

Our investigations have not revealed any prior art directed to the production of, or capable of producing, a dispersion of initiator(s) that is suitable for the manufacture of electrical grade polyvinyl chloride. Whilst there have been a number of proposals aimed at producing dispersions of organic peroxides that are alleged to be suitable for the polymerisation of ethylenically unsaturated monomers (including vinyl chloride), all fall short of the requirements and capabilities of the present invention. US—A—3825509 discloses an initiator emulsion or dispersion for olefinic polymerisation reactions comprising a free-radical polymerisation initiator emulsified or dispersed in an aqueous solution of polyoxyethylene sorbitan monolaurate and polyvinyl alcohol. US—A—4092470 discloses stable, pumpable, aqueous suspensions of organic peroxides containing thickeners of the nature of protective colloids and a particular combination of surfactants, for example a combination of sorbitan monolaurate and sorbitan monolaurate polyethylene oxide ether. The presence of ethoxylated surfactants in these emulsions, dispersions or suspensions renders them unsuitable for use in the production of electrical grade polyvinyl chloride.

In contradistinction to the above, the present invention is predicated upon our discovery that an aqueous suspension or dispersion (these terms, in this specification, have the same meaning and may be used interchangeably) of an organic peroxide, or of mixed organic peroxides, that is especially suitable for the production of electrical grade polyvinyl chloride, can in fact be made. Accordingly, in one broad aspect, there is provided by the invention a stable, pumpable, aqueous suspension of an organic peroxide or of mixed organic peroxides, which suspension is especially suitable for the polymerisation of vinyl chloride monomer to form a polyvinyl chloride meeting the specifications required of electrical cable sheathing materials and is also suitable for the polymerisation/copolymerisation of ethylenically unsaturated monomers to form general purpose polymers, the said suspension comprising one or more organic peroxides, one or more protective colloids and one or more surfactants characterised in the one or more surfactants is selected from the group consisting of fatty acid esters of polyhydric alcohols, excluding ethoxylated derivatives thereof, and fatty acid alkanolamides. Theinvention also includes within its ambit a process for the production of the last aforesaid aqueous suspension wherein the suspension is made to contain the one or more organic peroxides, the one or more protective colloids and the one or more selected surfactants.

The invention will now be described with sequential reference to (i) preferred sub-generic features, and (ii) numerical examples. However, as a prelude thereto, we now set forth definitions of certain terms employed both heretofore and in the ensuing description.

The criterion "stable" is taken to mean — with respect to a prescribed (e.g. four month) holding period at ambient temperature (about 20°C) since manufacture — the physical stability of an aqueous suspension per se (indicated by a maximum of 10% v/v of clear water substrate separated from the otherwise homogenous suspension); the chemical stability of the organic peroxide(s) (as measured by a maximum loss of 5% of active peroxide relative to the initial organic peroxide content); and the stability of the viscosity of the suspension (i.e. less than 20% variation relative to the initial viscosity).

"Pumpable", as a property of the suspension, is taken to mean that the homogenised suspension has a viscosity of less than 500 poise (50 Nsm$^{-2}$) and preferably of less than 100 poise (10 Nsm$^{-2}$) when measured with a Brookfields RVF viscometer using a #3 spindle at 4 rpm. The viscosity unit Nsm$^{-2}$ will be used hereafter 1 poise being equal to 10$^{-1}$ Nsm$^{-2}$.

Volume resistivity specifications — as required of polymers to be used for insulation and sheathing of electrical cable — are contained in the appropriate National Standards. For example, in Australia the standards AS 3147 and AS 3191 specify the minimum resistivity of cable grade PVC as 36.7 gigaohm metre at 20°C and the method of measurement is specified in AS 1255.1—1973.

The generic term "ethylenically unsaturated monomers" includes vinyl halides such as vinyl chloride, vinyl bromide and vinyl fluoride; vinylidene halides such as vinylidene chloride and vinylidene fluoride, or other molecules containing a terminal $CH_2=C=$ group such as ethylene, propylene, vinyl acetate.

The surfactant of the novel suspension and process — selected from the esters and alkanolamides indicated above — is defined as a component (i) which is capable of fulfilling its function as a single such component and (ii) which, in the case of the fatty acid esters of polyhydric alcohols, excludes ethoxylated derivatives of such esters. Ethoxylated derivatives of fatty acid esters of polyhydric alcohols are excluded because (inter alia) suspensions, incorporating such derivatives as surfactants, do not possess the required stability, and are incapable of producing satisfactory electrical grade polyvinyl chloride resin (in short, such suspensions suffer from the disadvantages of prior art techniques as summarised above). Whilst the expression "a surfactant" is not intended to exclude the presence and employment of more than one such component (i.e. the use of two or more such components would not be outside the broad scope of the invention), the invention is principally directed to the utilisation of the capability indicated in point (i) immediately heretobefore i.e. the surfactant component is usually a single such fatty acid ester or alkanolamide.

Turning now to preferred sub-generic features, the organic peroxide(s) is(are) solid at about 20°C with a total final concentration, in the aqueous suspension, of from 5 to 50% by weight (even more preferably 10 to 50% by weight). The organic peroxides are desirably selected from the following:

1. Peroxydicarbonates — such as dimyristyl peroxydicarbonate, dicetyl peroxydicarbonate, distearyl peroxydicarbonate bis (4-tert-butylcyclohexyl) peroxydicarbonate, bis (4-tert-amylcyclohexyl) peroxydicarbonate, dicyclohexyl peroxydicarbonate and dibenzyl peroxydicarbonate.

2. Aliphatic diacyl peroxides — such as dilauroyl peroxide, dimyristoyl peroxide, didecanoyl peroxide.

3. Aromatic diacyl peroxides — such as dibenzoyl peroxide, bis (2, 4 dichlorobenzoyl) peroxide, bis (o-methoxy-benzoyl) peroxide.

Preferred protective colloids include water soluble polymers of the cellulose derivatives class such as hydroxypropyl cellulose, hydroxypropyl methyl cellulose, hydroxyethyl cellulose, methyl cellulose, carboxymethyl cellulose; natural products such as gelatine, starch; and suspending agents used to disperse vinyl chloride monomer in water (in a reactor) such as polyvinyl alcohol, polyvinyl acetate and polyvinyl pyrrolidone. The addition rate of the colloid component may be from 0.1 to 10% by weight but, even more preferably, from 0.5 to 5% by weight. Hydroxylated alkyl celluloses also give slightly better long term physical stability of the finished suspension and are preferred. If desired, more than one colloid may be employed.

The surfactant is exemplified by fatty acid esters of polyhydric alcohols such as glycerol monostearate, glycerol monooleate, glycerol monopalmitate, sorbitan monolaurate, sorbitan monooleate, sorbitan sesquioleate, sorbitan monopalmitate, glycerol dilaurate, glycerol dioleate, glycerol distearate, and glycerol sesquioleate. As alkanolamide, there may be employed diethanolamided coconut oil. The surfactant may be desirably be incorporated at between 0.1 to 5% by weight, more preferably 0.25 to 2% by weight. As indicated heretofore, a single surfactant is adequate to achieve our purpose.

When water, organic peroxide(s), protective colloid and surfactant as set forth above are stirred in together and dispersed using appropriate homogenising equipment, a pumpable aqueous suspension of the organic peroxide is produced which will be successful in initiating vinyl chloride polymerisation to yield resin of electrical cable sheathing grade. The suspension will also naturally initiate production of polyvinyl chloride resin of less stringent specification. Among further properties of this pumpable aqueous dispersion of organic peroxide(s) that make it superior to prior art dispersions may also be listed the following:

its chemical, rheological and physical stability (e.g. over at least a four months holding period at ambient temperatures at about 20°C);

its ready reincorporation of any water that might separate (since the surfactant ensures that any organic matter will float and not cake);

reincorporation by simple shaking (of the container holding the suspension) will reform the suspension to almost the same physical stability as before separation occurred;

its ready dilutability to lower strength dispersions by adding the stock dispersion to water with appropriate homogenisation.

The invention will now be further described with reference to the previously foreshadowed numerical examples — which amply demonstrate the dispersion into water, of an organic peroxide solid at about 20°C, using only a protective colloid and a surfactant as herein defined. Again, it is to be understood that these examples are merely typically illustrative of the invention, and are therefore in no way to be limitatively construed. For instance, such criteria as the order of addition of the ingredients is generally not critical. In this connection however, it is mentioned that, from a plant production point of view the organic peroxide dispersion can be achieved in the shortest time by initially charging the make up vessel with water followed, sequentially, by addition of the organic peroxide(s), the surfactant, and finally the protective colloid. The suspension polymerisation of vinyl chloride, using as initiator the so produced suspension, is carried out in conventional fashion.

### Example 1

To a stirred mixture of 775 g of water and 200 g of dicetyl peroxydicarbonate was added 5 g of glycerol monostearate powder followed by 20 g of hydroxypropyl methyl cellulose. After stirring for 15 minutes the mixture was passed through a colloid mill once.

The smooth free flowing homogenous dispersion had a viscosity of 7 $Nsm^{-2}$. Analysis by iodimetry gave a dicetyl peroxydicarbonate concentration of 19.9% by weight. After four months standing at 23°C in diffuse natural light the viscosity was 6.5 $Nsm^{-2}$, the peroxydicarbonate was 19.6% by weight and 52 ml of water was tapped off from the bottom of the container. Re-adding the water to the container and shaking by hand for 30 seconds produced a homogenous dispersion again. This showed no separation after one month's standing.

Polyvinyl chloride hides made from resin incorporating this initiator and formulated with common ingredients for cable sheathing gave a volume resistivity of 1.2 × $10^{14}$ ohm. cm at 20°C.

Dilution of 100 ml of this 20% dispersion with 300 ml of demineralised water and homogenisation using appropriate equipment gave a suspension which showed no separation of substrate water after 2 days standing. After a fortnight's standing 50% by volume of water had separated. On shaking the container by hand for 30 seconds reincorporation of the water was effected. This restored suspension maintained its integrity over 4 hours standing.

### Example 2

To a stirred mixture of 775 g of water and 200 g of bis(4-tert-butylcyclohexyl) peroxydicarbonate was added 5 g of sorbitan monolaurate followed by 20 g of hydroxyethyl cellulose. After stirring for 15 minutes the mixture was passed through a colloid mill once.

The resulting smooth free flowing homogenous dispersion had a viscosity of 12 $Nsm^{-2}$. Analysis by iodimetry gave a concentration of the bis(4-tert-butylcyclohexyl) peroxydicarbonate of 19.6% by weight. After four months standing at 23°C in diffuse natural light the viscosity was 10 $Nsm^{-2}$, the peroxydicarbonate concentration was 19.2% by weight and 45 ml of water was tapped off from the bottom of the container. Re-adding the water to the container and shaking by hand for 30 seconds produced a homogenous dispersion again. After a further month's standing 15 ml of water were tapped from the bottom.

Polyvinyl chloride hides made from resin incorporating this initiator, and formulated with common ingredients for cable sheathing, gave a volume resistivity of 1.4 × $10^{14}$ ohm. cm at 20°C.

Dilution of 100 ml of this 20% dispersion with 300 ml of demineralised water and homogenisation using appropriate equipment gave a suspension which showed no separation of substrate water after 2 days standing. After a fortnight's standing 50% by volume of water had separated. On shaking the container by hand for 30 seconds reincorporation of the water was effected. This restored suspension maintained its integrity over 4 hours standing.

### Example 3

To a stirred mixture of 660 g of water and 300 g of dimyristyl peroxydicarbonate was added 10 g of diethanolamided coconut oil followed by 30 g of hydroxypropyl methyl cellulose. After stirring for 15 minutes the mixture was padded through a colloid mill once.

The resulting smooth free flowing homogenous dispersion had a viscosity of 9.5 $Nsm^{-2}$. Analysis by iodimetry gave a concentration of the dimyristyl peroxydicarbonate of 29.8% by weight. After four month's standing the viscosity was 10.5

$Nsm^{-2}$, the peroxydicarbonate concentration was 29.5% by weight, and 65 ml of water was tapped from the bottom of the container. Re-adding the water to the container and shaking by hand for 30 seconds produced a homogenous dispersion from which only 20 ml of water was tapped after a further month's standing.

### Example 4

To a stirred mixture of 800 g of water and 150 g of bis(4-tert-butylcyclohexyl) peroxydicarbonate was added 10 g of sorbitan sesquioleate followed by 40 g of polyvinyl alcohol. After stirring for 15 minutes the mixture was passed through a colloid mill once.

The resulting smooth free flowing homogenous dispersion had a viscosity of 5.5 $Nsm^{-2}$. Analysis by iodimetry gave a concentration of the peroxydicarbonate of 15.0% by weight. After four month's standing the viscosity was 5 $Nsm^{-2}$, the peroxydicarbonate concentration was 14.8% by weight and 90 ml of water was obtained from the bottom of the container. Reincorporating the water gave a suspension from which 30 ml of water was tapped after a further month's standing.

### Example 5

A stirred mixture of 400 g of dilauroyl peroxide and 565 g of water was passed through the colloid mill. The effluent was collected in a stirred vessel and to it was added 15 g of sorbitan monolaurate and 20 g of methyl cellulose. After 15 minutes stirring this mixture was passed through the colloid mill.

The resulting smooth free flowing homogenous dispersion had a viscosity of 15 $Nsm^{-2}$ and analysed at 39.6% by weight dilauroyl peroxide. After four month's standing the peroxide content has only dropped to 39.5% by weight, the viscosity was 13 $Nsm^{-2}$ and 30 ml of water was obtained from the bottom of the container. This was readily reincorporable with shaking to give a dispersion that separated only 10 ml of water with a further month's standing.

### Example 6

A stirred mixture of 500 g of dibenzoyl peroxide and 465 g of water were passed through a colloid mill. The effluent was collected in a stirred vessel and to it was added 15 g of sorbitan monolaurate and 20 g of methyl cellulose. Processing as in Example 5 gave a suspension of viscosity 20 $Nm^{-2}$, 50.1% by weight benzoyl peroxide and which separated 75 ml of water over four month's standing. Reincorporation of the water yielded a suspension that separated 20 ml of water over a further month's standing.

### Example 7

A stirred mixture of 775 g of water and 30 g of dilauroyl peroxide was passed through a colloid mill. This was collected in a stirred vessel and 170 g of dicetyl peroxydicarbonate was added to it. When all the organic peroxide appeared well suspended 5 g of glycerol monostearate followed by 20 g of hydroxypropylmethyl cellulose was added. After 15 minutes of stirring the mixture was passed through a colloid mill.

A smooth free flowing dispersion of viscosity of 8.5 $Nsm^{-2}$ was obtained. Iodimetric analysis indicated an appropriately balanced composition of the two organic peroxides. After four month's standing 45 ml of water could be tapped from the bottom of the container. Re-adding the water to the container and shaking by hand for 30 seconds produced a homogenous dispersion which had only separated 15 ml of water after another month's standing.

### Example 8

Following the method outlined in Example 7, 775 g of water, 30 g of dilauroyl peroxide, 170 g of bis(4-tert-butylcyclohexyl) peroxydicarbonate, 5 g of sorbitan monolaurate and 20 g of hydroxyethyl cellulose were mixed together and homogenised.

The resulting dispersion had a viscosity of 7.5 $Nsm^{-2}$/Iodimetric analysis indicated an appropriately balanced composition of the two organic peroxides. After four months standing 25 ml of water could be tapped from the bottom of the container. Reincorporating the water produced a homogenous dispersion which had only separated 20 ml of water after another months standing.

In closing, it is again emphasised that, as long as the basic premise is observed (viz. dispersability of the organic peroxide(s) into water using only a protective colloid and a surfactant as herein indicated), all matters of detail falling therewithin, not being critical in themselves, can be varied in accordance with situational requirements. From the foregoing, it should be evident that, by the invention, a substantive contribution to the art has been made.

**Claims**

1. A stable, pumpable, aqueous suspension of an organic peroxide or of mixed organic peroxides, which suspension is especially suitable for the polymerisation of vinyl chloride monomer to form a polyvinyl chloride meeting the specifications required of electrical cable sheathing materials and is also suitable for the polymerisation/copolymerisation of ethylenically unsaturated monomers to form general purpose polymers, said suspension comprising one or more organic peroxides, one or more protective colloids and one or more surfactants characterised in that the one or more surfactants is selected from the group consisting of fatty acid esters of polyhydric alcohols, excluding ethoxylated derivatives thereof, and fatty acid alkanolamides.

2. A suspension as claimed in claim 1 such suspension comprising 5 to 50% by weight of the one or more organic peroxides, 0.1 to 10% by weight of the one or more protective colloids, and 0.1 to 5% by weight of the one or more surfactants.

3. A suspension as claimed in claim 1 or 2 containing a single selected surfactant.

4. A suspension as claimed in any one of claims 1 to 3 wherein the percentage by weight of the one or more organic peroxides is in the range 10 to 50%.

5. A suspension as claimed in any one of claims 1 to 4 wherein the percentage by weight of the one or more protective colloids is in the range 0.5 to 5%.

6. A suspension as claimed in any one of claims 1 to 5 wherein the percentage by weight of the one or more surfactants is in the range 0.25 to 2%.

7. A suspension as claimed in any one of claims 1 to 6 wherein the proportions by weight of the one or more organic peroxides, the surfactants and the protective colloids in the suspension are 15% to 50%, 0.5% to 1.5% and 2% to 4% respectively.

8. A suspension as claimed in any one of claims 1 to 7 wherein the one or more organic peroxides is selected from peroxydicarbonates, aliphatic diacyl peroxides and aromatic diacyl peroxiides.

9. A suspension as claimed in claim 8 wherein the one or more organic peroxides is selected from one or more of dimyristyl peroxydicarbonate, dicetyl peroxydicarbonate, distearyl peroxydicarbonate, bis(4-tert-butylcyclohexyl) peroxydicarbonate, bis(4-tert-amylcyclohexyl) peroxydicarbonate, dicyclohexyl peroxydicarbonate, dibenzyl peroxydicarbonate, lauroyl peroxide, dimyristoyl peroxide, didecanoyl peroxide, dibenzoyl peroxide, bis(2,4-dichlorobenzoyl) peroxide and bis(o-methoxy-benzoyl) peroxide.

10. A suspension as claimed in any one of claims 1 to 9 wherein the one or more protective colloids is selected from water-soluble cellulose derivatives, natural products, and suspending agents for the suspension of vinyl chloride monomer.

11. A suspension as claimed in claim 10 wherein the one or more protective colloids is selected from hydroxy propyl cellulose, hydroxypropyl methyl cellulose, hydroxyethyl cellulose, methyl cellulose, carboxymethyl cellulose, gelatine, starch, polyvinyl alcohol, polyvinyl acetate and polyvinyl pyrrolidone.

12. A suspension as claimed in any one of claims 1 to 11 wherein the one or more surfactants is selected from glycerol monostearate, glycerol monooleate, glycerol monopalmitate, sorbitan monolaurate, sorbitan monooleate, sorbitan sesquioleate, sorbitan monopalmitate, glycerol dilaurate, glycerol dioleate, glycerol distearate, glycerol sesquioleate and diethanolamided coconut oil.

13. A process for the production of a stable, pumpable, suspension said process being characterised in that the aqueous suspension is made to contain one or more organic peroxides, one or more protective colloids and one or more surfactants selected from the group consisting of fatty acid esters of polyhydric alcohols, excluding ethoxylated derivatives thereof, and fatty acid alkanolamides.

14. A process as claimed in claim 13 wherein the suspension produced has the characteristics claimed in any one of claims 2 to 12 herein.

15. A process as claimed in claim 13 or 14 wherein the suspension is prepared by forming a mixture of one or more organic peroxides and water, introducing firstly the surfactant and secondly the protective colloid into the mixture and subjecting the mixture so formed to colloid milling or by forming a mixture of one or more organic peroxides and water, subjecting the mixture to colloid milling, introducing the surfactant and the protective colloid into the colloid milled mixture and subjecting the mixture so formed to further colloid milling.

16. A process for the polymerisation of vinyl chloride monomer to form a polyvinyl chloride meeting the specifications required of electrical cable sheathing materials or for the polymerisation/copolymerisation of ethylenically unsaturated monomers to form general purpose polymers, wherein there is employed, as initiator, a suspension in accordance with any one of claims 1 to 12 or produced by the process of any one of claims 13 to 15 herein.

**Patentansprüche**

1. Eine stabile, pumpbare, wässrige Suspension von einem organischen Peroxid oder einer Mischung organischer Peroxide, welche Suspension besonders geeignet für die Polymerisation von monomerem Vinylchlorid unter Bildung eines Polyvinylchlorids ist, welches den Anforderungen an Umhüllungsmaterial für elektrische Kabel entspricht, und welche außerdem geeignet ist für die Polymerisation/Copolymerisation von äthylenisch ungesättigten Monomeren unter Bildung von Polymeren für allgemeine Anwendungszwecke, wobei besagte Suspension ein oder mehrere organisch(s) Peroxid(e), ein oder mehrere Schutzkolloid(e) und einen oder mehrere oberflächenaktive(n) Stoff(e) enthält, dadurch gekennzeichnet, daß der bzw. die oberflächen aktive(n) Stoff(e) ausgewählt ist aus der Gruppe, bestehend aus Fettsäureestern mehrwertiger Alkohole, mit Ausnahme von deren äthoxylierten Derivaten, abgeleitet von Fettsäurealkanolamiden.

2. Eine Suspension, wie in Anspruch 1 beansprucht, welche Suspension 5 bis 50 Gewichtsprozent eines oder mehrerer organischer(n) Peroxide(s), 0,1 bis 10 Gewichtsprozent eines oder mehrerer Schutzkolloid(e) und 0,1 bis 5 Gewichtsprozent eines oder mehrerer oberflächenaktiver(n) Stoffe(s) enthält.

3. Eine Suspension wie in Anspruch 1 oder 2 beansprucht, welche einen einzigen ausgewählten oberflächenaktiven Stoff enthält.

4. Eine Suspension wie in irgendeinem der Ansprüche 1 bis 3 beansprucht, in welcher der Gewichtsprozentsatz an einem oder mehreren organischen Peroxid(en) im Bereich von 10 bis 50 % liegt.

5. Eine Suspension wie in irgendeinem der Ansprüche 1 bis 4 beansprucht, in welcher der Gewichtsprozentsatz an einem oder mehreren Schutzkolloid(en) im Bereich von 0,5 bis 5 % liegt.

6. Eine Suspension wie in irgendeinem der Ansprüche 1 bis 5 beansprucht, in welcher der Gewichtsprozentsatz an einem oder mehreren oberflächenaktiven Stoff(en) im Bereich von 0,25 bis 2 % liegt.

7. Eine Suspension wie in irgendeinem der Ansprüche 1 bis 6 beansprucht, in welcher der Gewichtsprozentsatz an einem oder mehreren organischen Peroxid(en), den oberflächenaktiven Stoffen und den Schutzkolloiden in der Suspension im Bereich von 15 bis 50 % bzw. im Bereich von 0,5 bis 1,5 % bzw. im Bereich von 2 bis 4 % liegt.

8. Eine Suspension wie in irgendeinem der Ansprüche 1 bis 7 beansprucht, in der das oder die organische(n) Peroxid(e) ausgewählt ist (sind) aus Peroxidicarbonaten, aliphatischen Diacylperoxiden und aromatischen Diacylperoxiden.

9. Eine Suspension wie in Anspruch 8 beansprucht, in welcher das oder die organische(n) Peroxid(e) ausgewählt ist (sind) aus ein oder mehreren Verbindungen der Gruppe Dimyristylperoxidicarbonat, Dicetylperoxydicarbonat, Distearylperoxidicarbonat, Bis(4-tert-butylcyclohexyl)peroxidicarbonat, Bis(4-tert-amylcyclohexyl)peroxidicarbonat, Dicyclohexylperoxidicarbonat, Dibenzylperoxidicarbonat, Lauroylperoxid, Dimyristoylperoxid, Didecanoylperoxid, Dibenzoylperoxid, Bis(2,4-dichlorbenzoyl)peroxid und Bis(o-methoxybenzoyl)peroxid.

10. Eine Suspension wie in irgendeinem der Ansprüche 1 bis 8 beansprucht, in welcher das oder die Schutzkolloid(e) ausgewählt ist (sind) aus wasserlöslichen Cellulosederivaten, Naturprodukten und Suspendiermitteln für die Suspension von Vinylchloridmonomer.

11. Eine Suspension wie in Anspruch 10 beansprucht, in welcher das oder die Schutzkolloid(e) ausgewählt ist (sind) aus der Gruppe, bestehend aus Hydroxypropylcellulose, Hydroxypropylmethylcellulose, Hydroxyäthylcellulose, Methylcellulose, Carboxymethylcellulose, Gelatine, Stärke, Polyvinylalkohol, Polyvinylacetat und Polyvinylpyrrolidon.

12. Eine Suspension wie in irgendeinem der Ansprüche 1 bis 11 beansprucht, in welcher der oder die oberflächenaktive Stoff(e) ausgewählt ist (sind) aus der Gruppe der Verbindungen Glycerinmonostearat, Glycerinmonooleat, Glycerinmonopalmitat, Sorbitanmonolaurat, Sorbitanmonooleat, Sorbitansesquioleat, Sorbitanmonopalmitat, Glycerindilaurat, Glycerindioleat, Glycerindistearat, Glycerinsesquioleat und diäthanolaminiertes Kokosnußöl.

13. Ein Verfahren zur Herstellung einer stabilen, pumpbaren Suspension, welches Verfahren dadurch gekennzeichnet ist, daß die wässrige Suspension derart zubereitet wird, daß sie ein oder mehrere organische(s) Peroxid(e), ein oder mehrere Schutzkolloid(e) und einen oder mehrere oberflächenaktive(n) Stoff(e) enthält, ausgewählt aus der Gruppe, die aus Fettsäureestern von mehrwertigen Alkoholen, mit Ausnahme von deren äthoxylierten Derivaten, abgeleitet von Fettsäurealkanolamiden, enthält.

14. Ein Verfahren wie in Anspruch 13 beansprucht, in welchem die hergestellte Suspension die Eigenschaften aufweist, wie sie in irgendeinem der Ansprüche 2 bis 12 vorstehend beansprucht werden.

15. Ein Verfahren wie in Anspruch 13 oder 14 beansprucht, gemäß welchem die Suspension hergestellt wird durch Bilden einer Mischung von einem oder mehreren organischen Peroxid(en) und Wasser, Eintragen von zuerst dem oberflächenaktiven Stoff und dann dem Schutzkolloid in die Mischung und kolloidales Vermahlen der so gebildeten Mischung oder durch Bildung einer Mischung von einem oder mehreren organischen Peroxid(en) und Wasser, kolloidales Vermahlen dieser Mischung, Eintragen des oberflächenaktiven Stoffes und des Schutzkolloids in die kolloidal vermahlene Mischung und anschließendes weiteres kolloidales Vermahlen der so gebildeten Mischung.

16. Ein Verfahren zur Polymerisation von monomerem Vinylchlorid unter Bildung eines Polyvinylchlorids, welches den Anforderungen entspricht, die an die Umhüllung von elektrischem Kabel gestellt werden, oder für die Polymerisation/Copolymerisation von äthylenisch ungesättigten Monomeren unter Bildung von Polymeren für allgemeine Anwendungszwecke, in welchem als Initiator eine Suspension gemäß irgendeinem der Ansprüche 1 bis 12 oder eine gemäß dem Verfahren irgendeines der Ansprüche 13 bis 15 hergestellte Suspension verwendet wird.

**Revendications**

1. Suspension aqueuse, stable et pompable, d'un peroxyde organique ou d'un mélange de peroxydes organiques, suspension qui convient particulièrement pour la polymérisation de chlorure de vinyle monomère en vue de former un polychlorure de vinyle qui répond aux exigences imposées pour les matériaux de revêtement des câbles électriques et qui est également appropriée pour la polymérisation ou la copolymérisation de monomères insaturation éthylénique en vue de former des polymères à usage général, ladite suspension comprenant un ou plusieurs peroxydes organiques, un ou plusieurs colloïdes protecteurs et un ou plusieurs agents tensioactifs, caractérisée en ce que l'agent tensio-actif ou les agents tensio-actifs est ou sont choisi(s) dans le groupe consistant en les esters d'acide gras et d'alcools polyhydroxylés, à l'exclusion des dérivés éthoxylés de ceux-ci, et en alkanolamides d'acide gras.

2. Suspension suivant la revendication 1 caractérisée en ce qu'elle comprend 5 à 50 % en poids d'un ou plusieurs peroxyde(s) organique(s), 0,1 à 10 % en poids d'un ou plusieurs colloïde(s) protecteur(s) et 0,1 à 5 % en poids d'un ou plusieurs agent(s) tensio-actif(s).

3. Suspension suivant l'une des revendications 1 à 2 caractérisée en ce qu'elle ne contient qu'un seul agent tensio-actif choisi.

4. Suspension suivant l'une quelconque des revendications 1 à 3 caractérisée en ce que le pourcentage en poids du ou des peroxyde(s) organique(s) est compris dans la gamme de 10 à 50 %.

5. Suspension suivant l'une quelconque des revendications 1 à 4 caractérisée en ce que le pourcentage en poids du ou des colloïde(s) protecteur(s) est compris dans la gamme de 0,5 à 5 %.

6. Suspension suivant l'une quelconque des revendications 1 à 5 caractérisée en ce que le pourcentage en poids de l'agent ou des agents tensio-actif(s) est compris dans la gamme de 0,25 à 2 %.

7. Suspension suivant l'une quelconque des revendications 1 à 6 caractérisée en ce que les proportions en poids du ou des peroxyde(s) organique(s), de l'agent ou des agents tensio-actif(s) et des colloïdes protecteurs dans la suspension sont respectivement de 15 % à 50 %, de 0,5 % à 1,5 % et de 2 % à 4 %.

8. Suspension suivant l'une quelconque des revendications 1 à 7 caractérisée en ce que le ou les peroxyde(s) organique(s) est ou sont choisi(s) parmi les peroxydicarbonates, les peroxydes aliphatiques diacylés et les peroxydes aromatiques diacylés.

9. Suspension suivant la revendication 8 caractérisée en ce que le ou les peroxyde(s) organique(s) est ou sont choisi(s) parmi les suivants: le peroxydicarbonate de dimyristyle, le peroxydicarbonate de dicétyle, le peroxydicarbonate de distéaryle, le peroxydicarbonate de bis(4-tert. butylcyclohexyle), le peroxydicarbonate de bis(4-tert. amylcyclohexyle), de peroxydicarbonate de dicyclohexyle, le peroxydicarbonate de dibenzyle, le peroxyde de lauroyle, le peroxyde de dimyristoyle, le peroxyde de didécanoyle, le peroxyde de dibenzoyle, le peroxyde de bis(2,4-dichlorobenzoyle) et le peroxyde de bis(o-méthoxybenzoyle).

10. Suspension suivant l'une quelconque des revendications 1 à 9 caractérisée en ce que le ou les colloïde(s) protecteur(s) est ou sont choisi(s) parmi les dérivés hydrosolubles de la cellulose, les produits naturels et les agents de dispersion utilisés pour mettre du chlorure de vinyle monomère en suspension.

11. Suspension suivant la revendication 10 caractérisée en ce que le ou les colloïde(s) protecteur(s) est ou sont choisi(s) parmi l'hydroxypropylcellulose, l'hydroxypropylméthylcellulose, l'hydroxyéthylcellulose, la méthylcellulose, la carboxyméthylcellulose, la gélatine, l'amidon, l'alcool polyvinylique, l'acétate de polyvinyle et la polyvinylpyrrolidone.

12. Suspension suivant l'une quelconque des revendications 1 à 11 caractérisée en ce que l'agent ou les agents tensio-actif(s) est ou sont choisi(s) parmi le monostéarate de glycérol, le monooléate de glycérol, le monopalmitate de glycérol, le monolaurate de sorbitane, le monooléate de sorbitane, le sesquioléate de sorbitane, le monopalmitate de sorbitane, le dilaurate de glycérol, le dioléate de glycérol, le distéarate de glycérol, le sesquioléate de glycérol et l'huile de coprah diéthanolamidée.

13. Procédé de fabrication d'une suspension stable et pompable caractérisée en ce qu'on fait en sorte que la suspension aqueuse contienne un ou plusieurs peroxyde(s) organique(s), un ou plusieurs colloïde(s) protecteur(s) et un ou plusieurs agent(s) tensio-actif(s) choisi(s) dans le groupe consistant en esters d'acide gras et d'alcools polyhydroxylés, à l'exclusion des dérivés éthoxylés de ceux-ci, et en alkanolamides d'acide gras.

14. Procédé suivant la revendication 13 caractérisé en ce que la suspension produite présente les caractéristiques revendiquées dans l'une quelconque des revendications 2 à 12 ci-dessus.

15. Procédé suivant l'une des revendications 13 et 14 caractérisé en ce qu'on prépare la suspension en formant un mélange d'un ou plusieurs peroxyde(s) organique(s) et d'eau, en y introduisant en premier lieu l'agent tensio-actif et en second lieu le colloïde protecteur puis en soumettant le mélange ainsi formé à l'action d'un moulin à colloïde ou bien en formant un mélange d'un ou plusieurs peroxyde(s) organique(s) et d'eau, en soumettant le mélange à l'action d'un moulin à colloïde, en introduisant l'agent tensio-actif et le colloïde protecteur dans le mélange traité dans le moulin à colloïde puis en soumettant le mélange ainsi formé à un nouveau traitement dans un moulin à colloïde.

16. Procédé de polymérisation de chlorure de vinyle monomère en vue de former un polychlorure de vinyle qui répond aux exigences imposées pour les matériaux de revêtement des câbles électriques ou de polymérisation ou copolymérisation de monomères à insaturation éthylénique en vue de former des polyméres à usage général, caractérisé en ce qu'on emploie comme initiateur une suspension répondant aux critères de l'une quelconque des revendications 1 à 12 ou fabriquée suivant le procédé décrit dans l'une quelconque des revendications 13 à 15 ci-dessus.